# EUROPEAN PATENT APPLICATION

(11) **EP 3 073 313 A1**
(43) Date of publication of application: **28.09.2016**
(21) Application number: 16160749.4
(22) Date of filing: 16.03.2016
(51) Int. Cl.: G02B 27/01, F21V 8/00

(54) **LIGHT GUIDE DEVICE, HEAD-MOUNTED DISPLAY, AND METHOD OF MANUFACTURING LIGHT GUIDE DEVICE**

(30) Priority: 23.03.2015 JP 2015059170
(71) Applicant: Seiko Epson Corporation, Shinjuku-ku Tokyo (JP)
(72) Inventor: HIRAIDE, Noriaki, Suwa-shi, Nagano 392-8502 (JP)
(74) Representative: Miller Sturt Kenyon

(57) **Abstract**

A light guide device includes a light incident portion that takes image light into the inside, a light guide portion that guides the image light taken from the light incident portion through total reflection at light guide surfaces that extend to face each other, a light emission portion that takes the image light passing through the light guide portion to the outside, and a protective layer that is provided in association with at least the light emission portion and suppresses breakage of the light emission portion. According to this light guide device, since the protective layers are provided in association with the light emission portion or the like, the light emission portion or the like is protected and it is possible to prevent the light emission portion or the like from being easily damaged during processing or during use. A head-mounted display comprising such a light guide device. A method of manufacturing such a light guide device, wherein the protective layer is provided through insert molding.

## Description

### 1. Technical Field

The present invention relates to a light guide device suitable for incorporation into a head-mounted display or the like mounted on a head and being used, a head-mounted display, and a method of manufacturing the light guide device.

### 2. Related Art

In recent years, various head-mounted displays of types that guide image light from a display element to eyes of an observer using a light guide plate have been proposed as head-mounted displays which enable formation and observation of a virtual image.

As the head-mounted display, for example, a head-mounted display including a light guide plate in which a plurality of glass plates with a reflective layer are laminated and cut into an image extraction portion is known (see, for example, JP-A-2013-076847, JP-A-2010-164988, and JP-A-2010-145859). In this case, a structure in which a dielectric multilayer film or a half mirror is interposed between blocks obtained by cutting the glass plate is obtained.

However, since the light guide plate as described above is obtained by bonding the blocks obtained by cutting the glass plates, a structure in which bonding portions are present side by side at a plurality of places is obtained, and it is not easy to ensure strength. Further, in the case of the light guide plate, it is not easy to cut the light guide plate in a desired outer shape after the light guide plate is formed, and the degree of freedom of the outer shape is low.

### SUMMARY

An advantage of some aspects of the invention is to provide a light guide device capable of ensuring sufficient strength and increasing the degree of freedom of an outer shape.

Another advantage of some aspects of the invention is to provide a head-mounted display including the light guide device as described above and a method of manufacturing such a light guide device.

A light guide device according to an aspect of the invention includes a light incident portion that takes image light into the inside; a light guide portion that guides the image light taken from the light incident portion through total reflection at first and second light guide surfaces that extend to face each other; a light emission portion that takes the image light passing through the light guide portion to the outside; and a protective layer that is provided in association with at least the light emission portion and suppresses breakage of the light emission portion.

In the light guide device, since the protective layer that suppresses breakage of the light emission portion is provided in association with at least the light emission portion, the light emission portion or the like is protected, and it is possible to prevent the light emission portion from being easily damaged. Accordingly, strength of the light guide device is sufficiently high while the light guide device is thin. As a result, processing after the protective layer is provided is facilitated and the degree of freedom of the shape increases.

In a specific aspect of the invention, the protective layer is in a sheet shape or a plate shape. In this case, the protective layer is relatively thick, and it is possible to improve the strength of the protective layer and the strength of the light emission portion.

In another aspect of the invention, the light emission portion includes a multi-slit-shaped reflective portion in which a plurality of reflective elements reflecting the image light is arranged. In this case, it is easy for breakage to occur at a boundary portion at which the reflective element is arranged, but the protective layer prevents the breakage at the boundary portion.

In still another aspect of the invention, the reflective portion is a flat plate-shaped member formed by arranging the reflective element between a plurality of prism-shape light-transmissive members, and the protective layer is affixed to the flat plate-shaped member. In this case, the protective layer has a role of reinforcing bonding between the light-transmissive members, and it is possible to easily protect the light emission portion or the like.

In still another aspect of the invention, the protective layer is provided on at least one of surfaces on the observer side and the outer side of the light emission portion. For example, when the protective layer is provided on the surface on the outer side, protection of the light emission portion or the like from objects on the outer side becomes reliable, and when the protective layer is provided on the surface on the observation side, protection of eyes or a face becomes reliable.

In still another aspect of the invention, the protective layer is provided in an area other than the light incident portion. In this case, the light guide portion or the like is protected by the protective layer.

In still another aspect of the invention, the protective layer is also provided on an end surface on the light emission portion side. In this case, it is possible to prevent exposure of the end surface and protect the end portion using the protective layer.

In still another aspect of the invention, the protective layer includes a light-transmissive main body, and a surface treatment layer that covers a surface of the main body. In this case, the surface treatment layer can have functions such as strength improvement and anti-reflection.

In still another aspect of the invention, the protective layer is formed of a resin material having adjusted transmittance, and has a uniform thickness. In this case, the protective layer can have a filtering function.

A head-mounted display according to another aspect of the invention includes the above-described light guide device; and an image forming device that forms image light incident on the light guide device.

In the head-mounted display, since the light guide device is incorporated, it is possible to improve strength or workability in the light emission portion or the like of the light guide device, and it is possible to prevent simple damage of the light guide device to increase a degree of freedom of a shape of the light guide device.

A method of manufacturing a light guide device according to another aspect of the invention is a method of manufacturing a light guide device including a light incident portion that takes image light into the inside, a light guide portion that guides the image light taken from the light incident portion through total reflection at first and second light guide surfaces that extend to face each other, and a light emission portion that takes the image light passing through the light guide portion to the outside, the method of manufacturing a light guide device including: forming a protective layer in a portion including at least the light emission portion. The protective layer, for example, can be formed separately from the light emission portion or the like, and then, affixed to the light emission portion or the like.

In the method of manufacturing a light guide device, since the protective layer is formed in the portion including at least the light emission portion, it is possible to protect the light emission portion or the like and suppress damage thereof. Accordingly, strength of the light guide device is sufficiently high while the light guide device being thin. As a result, processing after the protective layer is provided is facilitated and a degree of freedom of the shape increases.

In a specific aspect of the invention, the light emission portion is formed by providing a reflective film on a plurality of glass plates, superposing the plurality of glass plates, and obliquely cutting the glass plates. In this case, it is possible to easily and accurately form a multi-slit-shaped reflective portion or a light emission portion in which a plurality of reflective elements are arranged.

In another specific aspect of the invention, shape processing is performed on the light emission portion having the protective layer provided therein together with the protective layer. In this case, shape processing of the light emission portion can be performed while damage of the light emission portion is prevented, processing of the light emission portion is facilitated, and the degree of freedom of a shape thereof increases.

In still another specific aspect of the invention, the protective layer is provided as a film affixed to a portion including the light emission portion or a plastic plate bonded to the portion including the light emission portion. In this case, the protective layer is formed relatively easily.

In still another specific aspect of the invention, the protective layer is provided through insert molding in which the light emission portion is positioned and is put into a mold, and then a resin is injected into the mold. In this case, the light guide device can have a variety of contours, and an effect of high strength of the light emission portion or the like also becomes reliable.

### BRIEF DESCRIPTION OF THE DRAWINGS

Embodiments of the invention will now be described by way of example only with reference to the accompanying drawings, wherein like numbers reference like elements.
Fig. 1A is a cross-sectional view illustrating a light guide device and a head-mounted display according to a first embodiment, Figs. 1B and 1C are a front view and a plan view of the light guide device.
Fig. 2 is a cross-sectional view illustrating a light emission portion including a half mirror layer or a reflective portion.
Fig. 3 is an enlarged cross-sectional view illustrating a structure of a protective layer or the like.
Fig. 4 is a perspective view of a head-mounted display into which the light guide device illustrated in Fig. 1A or the like is incorporated.
Fig. 5 is a cross-sectional view illustrating a light guide device according to a second embodiment.
Fig. 6 is a conceptual diagram illustrating a method of manufacturing the light guide device of Fig. 5.
Fig. 7 is a cross-sectional view illustrating a light guide device or the like according to a third embodiment.
Fig. 8 is an enlarged cross-sectional view illustrating a reflective portion or a light emission portion of the light guide device of Fig. 7.
Fig. 9 is a cross-sectional view illustrating a modification example of the light guide device of Fig. 7.
Fig. 10 is a cross-sectional view illustrating another modification example of the light guide device of Fig. 7.
Fig. 11 is a cross-sectional view illustrating yet another modification example of the light guide device of Fig. 7.
Fig. 12 is a cross-sectional view illustrating a light guide device according to a fourth embodiment.

### DESCRIPTION OF EXEMPLARY EMBODIMENTS

### First Embodiment

Hereinafter, a light guide device and a head-mounted display according to a first embodiment of the invention will be described in detail with reference to the accompanying drawings.

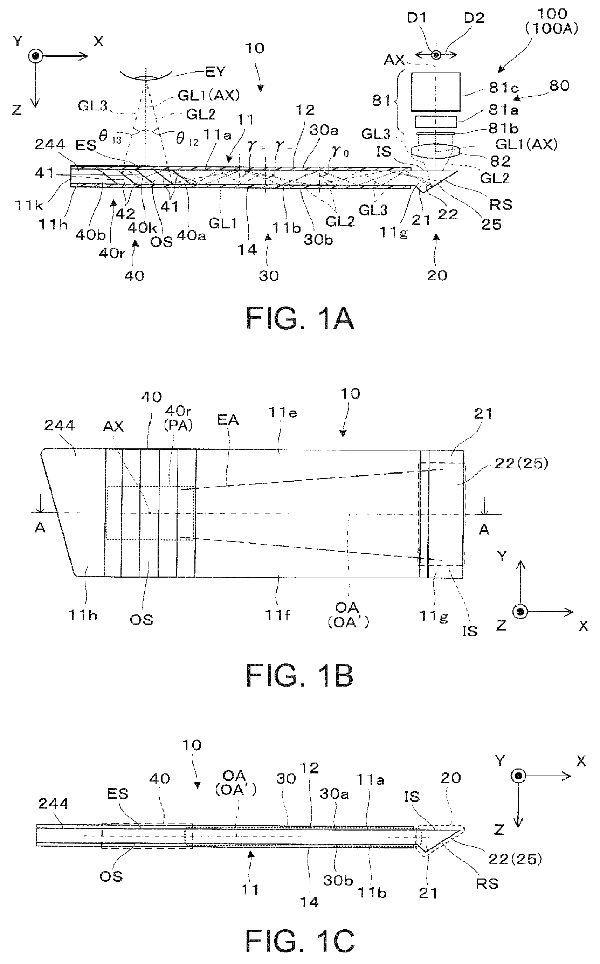

As illustrated in Figs. 1A to 1C, a light guide device 10 of this embodiment has a flat plate-shaped appearance extending parallel to an XY plane in the figures, and includes a plate-shaped body member 11, and a pair of protective layers 12 and 14 between which the main body member 11 is interposed. Fig. 1A corresponds to a cross section taken along a line A-A of the light guide device 10 illustrated in Fig. 1B.

An image forming device 80 is fixed to a light incident side of the light guide device 10 through an optical frame (not illustrated). The light guide device 10 and the image forming device 80 form a head-mounted display 100 which is a virtual image display device for one eye that is available individually, and the head-mounted display 100 provides a virtual image as a moving image or a still image to an observer. The head-mounted display 100 is also called a head-mount display.

In the light guide device 10, the main body member 11 is a thin plate shape and is formed using a light-transmissive material, and specifically, glass as a base material. The main body member 11 includes a first main surface 11a on the observer side, a second main surface 11b on the outer side, an upper end portion 11e, a lower end portion 11f, and lateral end portions 11g and 11h. The first main surface 11a and the second main surface 11b are planes parallel to each other and extend along the XY plane. The main body member 11 is an integral member, but functionally includes a light incident portion 20 that takes image light into the inside, a light guide portion 30 that guides the image light from one end to the other end, and a light emission portion 40 that takes the image light to the outside. The main body member 11 takes the image light from the image forming device 80 into the inside through the light incident portion 20, guides the taken image light to the light emission portion 40 through the light guide portion 30, and forms a virtual image so that the image light emitted from the light emission portion 40 is incident on the eye EY of the observer.

The light incident portion 20 is a portion formed integrally with light guide portion 30 so as to extend the light guide portion 30 in a longitudinal direction in the one lateral end portion 11g of the main body member 11. The light incident portion 20 includes a prism portion 21 formed integrally with the light guide portion 30, and a reflective surface 22 associated with the prism portion 21. The prism portion 21 includes a light incident surface IS and an inclined surface RS as side surfaces. A mirror layer 25 is formed on the inclined surface RS so as to cover the inclined surface RS. Here, the mirror layer 25 cooperates with the inclined surface RS to function as the reflective surface 22 arranged to be inclined with respect to the light incident surface IS. This reflective surface 22 bends the image light incident from the light incident surface IS and directed in a +Z direction as a whole, so that the image light is directed in a -X direction biased in a -Z direction as a whole, thereby coupling the image light to the inside of the light guide portion 30. The light incident surface IS is a portion of the first main surface 11a.

The light guide portion 30 includes a first light guide surface 30a which is a portion of the first main surface 11a, and a second light guide surface 30b which is a portion of the second main surface 11b. The first and second light guide surfaces 30a and 30b are two planes facing each other and extending parallel to the XY plane, and totally reflect image light bent by the reflective surface 22 of the light incident portion 20, respectively. That is, the image light reflected by the reflective surface 22 of the light incident portion 20 is first incident on and totally reflected by the first light guide surface 30a. Then, the image light is incident on and totally reflected by the second light guide surface 30b. Hereinafter, this operation is repeated, and accordingly, the image light is guided to a rear side of the main body member 11, that is, a -X side on which the light emission portion 40 is provided. An effective area EA (see Fig. 1B) through which the image light passes in the light guide portion 30 is relatively wider in a vertical direction on the light incident portion 20 side.

The light emission portion 40 is a flat plate-shaped member formed integrally with the light guide portion 30 so as to extend the light guide portion 30 to a -X side, that is, an opposite side of the light incident portion 20. The light emission portion (flat plate-shaped member) 40 includes a multi-slit-shaped angle conversion portion, that is, a reflective portion 40r that directs the image light to an observer side while maintaining the angle information of the image light, which includes a large number of half mirror layers 41 inclined with respect to the first and second light guide surfaces 30a and 30b and arranged parallel to each other at equal intervals. The half mirror layer 41 is a reflective element for reflecting the image light and is interposed between a light emission surface ES and an outer surface OS which extend parallel to each other. In the illustrated example, the half mirror layer 41 or the reflective portion 40r is formed only in a central area PA with respect to a vertical direction (see Fig. 1B), but may be formed in the entire light emission portion 40.

In the light emission portion (flat plate-shaped member) 40, each half mirror layer (reflective element) 41 is inclined to be close to the light incident portion 20 on the outer side rather than on the observer side of the main body member 11, and is inclined to be close to the light incident portion 20 on the outer surface OS rather than on the light emission surface ES. Specifically, each half mirror layer 41 is arranged to be inclined to the +Z side on the +X side. In other words, each half mirror layer 41 is inclined so that an incident side end (+X side) thereof is rotated clockwise with respect to the main surfaces 11a and 11b or the XY plane using a longitudinal direction (Y-axis direction) as an axis. A rotation angle in this case is set to be suitable for an angular state of the image light propagating through the light guide portion 30. The light emission portion 40 or the reflective portion 40r reflects and bends the image light incident through the first and second light guide surfaces 30a and 30b of the light guide portion 30 at a predetermined angle to emit the image light to the eyes EY side of the observer through the light emission surface ES. That is, the light emission portion 40 changes the angle of the image light propagating through the light guide portion 30. The light emission surface ES is a portion of the first main surface 11a, and the outer surface OS is a portion of the second main surface 11b.

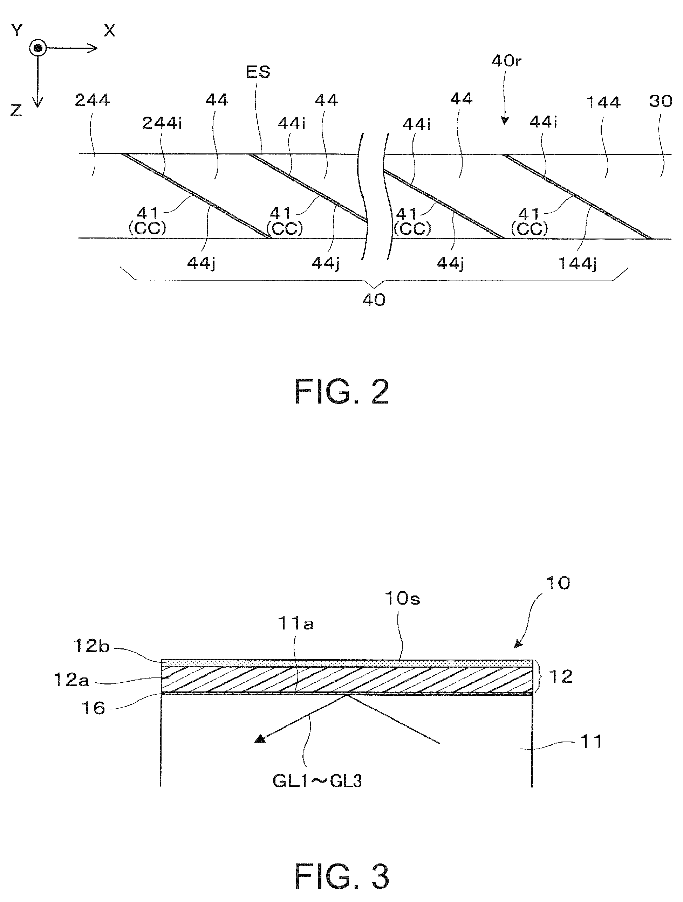

As illustrated in an enlarged form in Fig. 2, the light emission portion 40 or the reflective portion 40r is a multi-slit-shaped optical system having a structure in which a plurality of light-transmissive members 44 are arranged in the X direction at a predetermined pitch. Each light-transmissive member 44 includes a first bonding surface 44i on the light incident side or the entrance side, and includes a second bonding surface 44j on the light emission side or the rear side. On the second bonding surface 44j of the light emission portion 40 and a bonding surface 144j of a light guide prism 144 on the entrance side serving as an end portion of the light guide portion 30, the half mirror layer (reflective element) 41 that is a semi-transmissive reflective film is formed on a local partial region, or on the first bonding surface 44i of the light emission portion 40 and a bonding surface 244i of the light-transmissive member 244 on the rear side, the half mirror layer (reflective element) 41 that is a semi-transmissive reflective film is formed on a local partial region. Reflectance of the half mirror layer 41 to the image light is equal to or higher than 10% and equal to or lower than 50% in an assumed incidence angle range of the image light from the viewpoint of facilitation of observation of external light through transparency. While the reflectance of the half mirror layer 41 to the image light in a specific example is set to, for example, 20%, and the transmittance to the image light is set to, for example, 80%, the plurality of half mirror layers 41 may be set to have different reflectance or transmittance. The bonding surface 144j of the light guide prism 144 on the exit side and the bonding surface 44i on the most entrance side or the incident side of the light emission portion 40 are bonded to each other by an adhesive layer CC. Further, the bonding surfaces 44i and 44j of the pair of adjacent light-transmissive members 44 in the light emission portion 40 are bonded to each other by the adhesive layer CC. Further, the bonding surface 44j on the rearmost side or the side opposite to the incident side of the light emission portion 40 and the bonding surface 244i of the light-transmissive member 244 on the rear side are bonded to each other by the adhesive layer CC.

The prism portion 21 of the light incident portion 20, and the light guide portion 30 are formed of the same material as that of the light-transmissive member 44, the light guide prism 144, or the like of the light emission portion 40, and have the same refractive index as that of the light-transmissive member 44, the light guide prism 144, or the like. Therefore, the image light incident on the main body member 11 uniformly propagates between the first main surface 11a and the second main surface 11b.

While the pair of protective layers 12 and 14 are in a plastic plate shape having a certain thickness (that is, a plate shape) in the shown example, the protective layers 12 and 14 may be in a film shape (that is, sheet shape). However, the protective layers 12 and 14 are not thin films which cannot maintain shapes thereof alone and in which presence of a substrate is assumed. The protective layers 12 and 14 are affixed to the first and second main surfaces 11a and 11b so as to cover the first and second main surfaces 11a and 11b of the main body member 11. The protective layers 12 and 14 are provided in a region other than the light incident portion 20. Specifically, the protective layer 12 is fixed to the main body member 11 using an adhesive or the like to cover the first light guide surface 30a, the light emission surface ES, and the like, but to expose the light incident surface IS. The other protective layer 14 is fixed to the main body member 11 using an adhesive or the like to cover the second light guide surface 30b, the outer surface OS, and the like. Both of the protective layers 12 and 14 are members having a uniform thickness, and have light transmission properties, similar to the light incident portion 20. Both of the protective layers 12 and 14 protect the light guide portion 30 and the light emission portion 40 and are affixed to the reflective portion 40r, particularly, such that the reflective portion 40r which is a flat plate-shaped member is interposed therebetween. As a result, both of the protective layers 12 and 14 prevent the light guide portion 30 or the light emission portion 40 from being broken, and increase strength of the light guide device 10 while thinning the light guide device 10.

As illustrated in Fig. 3, the protective layer 12 includes a main body 12a formed of a light-transmissive flexible resin material, and a surface treatment layer 12b that covers a surface of the main body 12a. The protective layer 12 is bonded to the first main surface 11a of the main body member 11 by an adhesive 16 made of a light-transmissive photo-curable resin. Here, the surface treatment layer 12b is a hard coat layer, and is formed of, for example, a thermosetting silicone-based material. When the surface treatment layer 12b is a hard coat layer, a surface hardness similar to that of glass can be realized, the protective layer 12 can be prevented from being damaged, and weatherability of the protective layer 12 can also be improved. The surface treatment layer 12b may also be an anti-reflective coating layer. For example, the surface treatment layer 12b is formed of a dielectric multilayer film. If the surface treatment layer 12b is an anti-reflective coating layer, occurrence of ghosts can be suppressed and light reduction at the time of observation of the outside can be suppressed. The surface treatment layer 12b may also be a wavelength-selective transmissive filter that enables blue light cutting or the like. The refractive index of the surface treatment layer 12b or the adhesive 16 is sufficiently lower than the refractive index of the main body member 11, and total reflection of the image light in an inner surface of the first main surface 11a is ensured.

Although not described, the protective layer 14 on the outer side has the same structure and function as those of the protective layer 12 on the observer side described above. The protective layer 14 can have a role of protecting the light emission portion 40 or the like from an object on the outer side, and the protective layer 12 can have a role of protecting the eyes EY or a face.

Depending on a manner of usage, any one of the protective layer 12 on the observer side and the protective layer 14 on the outer side can be omitted. That is, the protective layer 12 on the observer side can be omitted and the protective layer 14 can remain. On the contrary, the protective layer 12 can remain and the protective layer 14 can be omitted.

The protective layers 12 and 14 have a high transmittance distribution uniform in a visible region, but can shield an infrared region or an ultraviolet region. That is, the protective layers 12 and 14 may be formed of a resin material having adjusted transmittance, and the surface treatment layer 12b or the main body 12a of the protective layer 12 may function as a wavelength-selective transmissive filter. Further, the protective layers 12 and 14 may have spatial distribution of the transmittance. For example, only a region corresponding to the central area PA of the light emission portion 40 can have a high transmittance. In this case, a phenomenon that external light observed over the central area PA is darker than surroundings can be suppressed.

The image forming device 80 includes an image display device 81 and a projection optical system 82. Among them, the image display device 81 includes an illumination device 81a that emits two-dimensional illumination light, a liquid crystal display device 81b which is a transmissive spatial light modulation device, and a driving control unit 81c that controls operations of the illumination device 81a and the liquid crystal display device 81b.

The illumination device 81a generates illumination light including three colors of red, green, and blue. The liquid crystal display device 81b spatially modulates illumination light from the illumination device 81a to form an image light to be a display target such as a moving image. The driving control unit 81c supplies electric power to the illumination device 81a to emit illumination light with stable luminance, and outputs a driving signal to the liquid crystal display device 81b to form color image light which becomes a base of a moving image or a still image as a transmittance pattern.

The projection optical system 82 is a collimator lens that converts image light emitted from each point on the liquid crystal display device 81b to a light flux in a parallel state. That is, the projection optical system 82 emits the image light that contributes to formation of a virtual image as parallel light that does not form an image.

Hereinafter, an optical path of the image light in the light guide device 10 will be described. Primary components of the respective image light GL1, GL2, and GL3 emitted from the projection optical system 82 are incident from the light incident surface IS of the light guide device 10, and then repeatedly totally reflected at different angles by the first and second main surfaces 11a and 11b.

Specifically, the image light GL1 emitted from a center point of the liquid crystal display device 81b passes through the projection optical system 82, is incident on the light incident surface IS as a parallel light beam, is reflected by the reflective surface 22, is incident on the first main surface 11a of the light guide device 10 at a standard reflection angle γ0, and is totally reflected. Then, the image light GL1 is repeatedly totally reflected by the first and second main surfaces 11a and 11b while maintaining the standard reflection angle γ0, and then, reaches a central portion 40k of the light emission portion 40. The image light GL1 reflected by the central portion 40k is emitted from the light emission surface ES as a parallel light beam in an optical axis AX direction perpendicular to the light emission surface ES or the XY plane. Further, the image light GL2 emitted from one side (+X side) of the liquid crystal display device 81b passes through the projection optical system 82, is incident on the light incident surface IS as a parallel light beam, is reflected by the reflective surface 22, is incident on the first main surface 11a of the light guide device 10 at a maximum reflection angular γ+ (>γ0), and is incident on a surrounding portion 40a on the most entrance side (+X side) of the light emission portion 40 while being repeatedly totally reflected by first and second main surfaces 11a and 11b. The image light GL2 reflected by this surrounding portion 40a is at an obtuse angle with respect to the +X axis to be separated from the light incident portion 20, and is emitted in a direction inclined at an angle θ12 with respect to the optical axis AX. Further, the image light GL3 emitted from the other end side (-X side) of the liquid crystal display device 81b passes through the projection optical system 82, is incident on the light incident surface IS as a parallel light beam, is reflected by the reflective surface 22, is incident on the first main surface 11a of the light guide device 10 at a minimum reflection angle γ- (<γ0), and is incident on a surrounding portion 40b on the rearmost side (-X side) of the light emission portion 40 while being repeatedly totally reflected by the first and second main surfaces 11a and 11b. The image light GL2 reflected by the surrounding portion 40b is at an obtuse angle with respect to the +X axis to be returned to the light incident portion 20 and is emitted in a direction inclined at an angle θ13 with respect to the optical axis AX.

Hereinafter, an example of a method of manufacturing the light guide device 10 will be described. A large number of glass plates that are parallel flat plates of glass are prepared in advance, and a reflective layerthat is a metal reflective film or a dielectric multilayer film is formed on one surface of each glass plate to prepare a large number of element plates. Thereafter, the large number of formed element plates are bonded with an adhesive and laminated to be superposed on each other, and all are obliquely cut. Accordingly, a plate-shaped member, that is, a reflective unit having a structure in which the half mirror layer 41 formed of a metal reflective film or a dielectric multilayer film is interposed between the light-transmissive members 44, which are elongated prism pieces obtained by obliquely dividing the parallel flat plates can be obtained. By polishing a pair of facing main surfaces of this reflective unit, the light emission surface ES and the outer surface OS are formed and the light emission portion 40 is obtained. Then, for example, the light guide portion 30 formed of glass is bonded to the light emission portion 40, and the main body member 11 is complete.

In addition, the main body 12a which is a base material of the protective layer 12 is prepared, and the surface treatment layer 12b is formed on one surface of the main body 12a. For the surface treatment layer 12b, for example, the one surface of the main body 12a is sealed and coated by a dip method and cured by heat treatment or the like. Although not described in detail, the protective layer 14 is also prepared in the same manner as the protective layer 12.

Then, a pair of protective layers 12 and 14 are affixed to the first and second main surfaces 11a and 11b of the main body member 11 so as to cover the first and second main surfaces 11a and 11b of the main body member 11. Further, an outer periphery of the main body member 11 is subjected to shape processing into a desired shape together with the protective layers 12 and 14 through cutting or the like, and accordingly, the light guide device 10 is complete. The light guide device 10 is assembled into a frame (not illustrated) together with the image forming device 80.

According to the light guide device 10 in the embodiment, since the protective layers 12 and 14 are provided in association with the light emission portion 40 and the light guide portion 30, the light emission portion 40 and the like are protected and damage thereof can be simply prevented during processing or during use. In particular, an effect of prevention of breakage at the boundary portion at which the half mirror layers 41 are arranged in the reflective portion 40r is significant. Accordingly, the light guide device 10 is thinned and has sufficiently high strength. As a result, processing after the protective layers 12 and 14 are provided is facilitated, and the degree of freedom of the shape is increased.

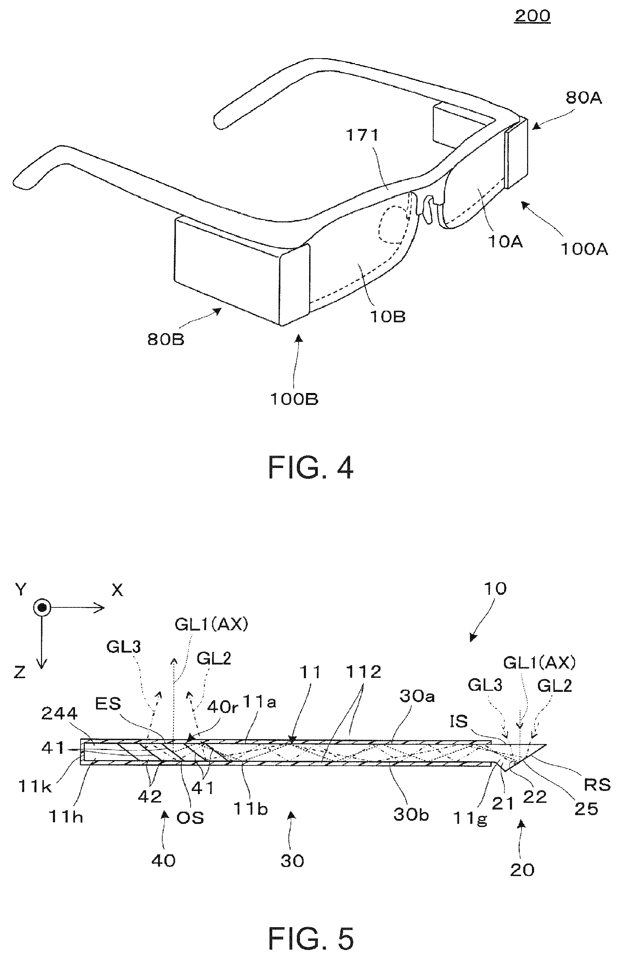

Fig. 4 is a perspective view illustrating an appearance of a head-mounted display 200 into which the light guide device 10 illustrated in, for example, Figs. 1A to 1C, is incorporated. The head-mounted display 200 has an appearance similar to eye glasses, and can cause image light based on a virtual image to be recognized by both eyes of an observer wearing the head-mounted display 200 and can cause an external image to be observed through transparency by both eyes of the observer. The head-mounted display 200 includes a pair of light guide devices 10A and 10B that cover the front of the eyes of the observer, a frame 171 that supports the light guide devices 10A and 10B, and first and second image forming devices 80A and 80B added to portions from a front cover portion to a rear bow portion (temple) of the frame 171. A first display device 100A that is a combination of the first light guide device 10A and the first image forming device 80A to the right in Fig. 4 is a portion that forms a virtual image for a left eye, and correspond to the head-mounted display 100 illustrated in Fig. 1A. Further, a second display device 100B that is a combination of the second light guide device 10B and the second image forming device 80B to the left in Fig. 4 is a portion that forms a virtual image for a right eye, and has a structure in which the head-mounted display 100 illustrated in Fig. 1A is mirror-inverted. The light guide devices 10A and 10B are required to have various contours depending on use or preference. The protective layers 12 and 14 that suppress breakage are provided in advance, thereby facilitating shape processing.

### Second Embodiment

Hereinafter, a head-mounted display according to a second embodiment will be described. The head-mounted display according to the present embodiment is a modification example of the head-mounted display 100 according to the first embodiment, and is the same as the first head-mounted display 100 unless otherwise mentioned.

As illustrated in Fig. 5, in the case of a light guide device 10 of the second embodiment, a protective layer 112 covers first and second main surfaces 11a and 11b of a body member 11, and covers an end surface 11k in a lateral end portion 11h on the light emission portion 40 side. Accordingly, with the protective layer 112, it is possible to prevent exposure of the end surface 11k to protect the lateral end portion 11h.

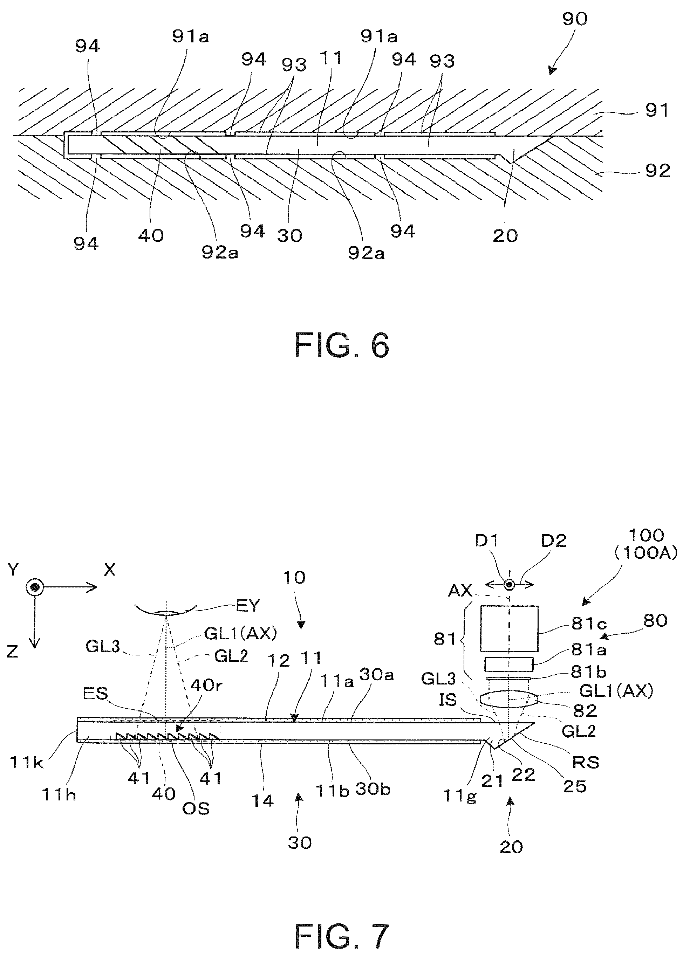

Fig. 6 is a diagram illustrating a process of a method of manufacturing the light guide device 10 illustrated in Fig. 5. A process to manufacture of the main body member 11 is the same as that in the light guide device 10 of the first embodiment, and a process after manufacture of the main body member 11 will be described. In the case of the light guide device 10 of the second embodiment, the protective layer 112 is formed using injection molding and, specifically, insert molding. In injection molding, the main body member 11 is fixed inside a mold 90 and the insert molding is performed. The mold 90 includes a pair of transfer molds 91 and 92, and the transfer molds 91 and 92 are bound together to form a molding space 93. A space in which the main body member 11 is accommodated is provided in the molding space 93, and a plurality of projections 94 that support the main body member 11 while positioning the main body member 11 are formed on transfer surfaces 91a and 92a forming the molding space 93. By injecting a molten resin into the molding space 93, the molding space 93 is filled with the molten resin, and the protective layer 112 is formed by the cooling and hardening of the molten resin 95. The surface of the light guide portion 30 or the light emission portion 40, that is, the first and second light guide surfaces 30a and 30b, the light emission surface ES, the outer surface OS, and the like in the main body member 11 taken from the mold 90 are covered with the protective layer 112, and the lateral end portion 11h is also covered with the protective layer 112 (see Fig. 5). An inner surface of the protective layer 112 is in close contact with and is bonded to the main body member 11 due to heat at the time of molding. After the protective layer 112 is formed, a hard coat layer or an anti-reflective coating layer may also be provided on a surface of the protective layer 112.

While it is assumed in the second embodiment that a process of cutting an outer periphery of the main body member 11 or the like after the protective layer 112 is formed is not provided, an outer periphery of the obtained light guide device 10 may be cut in a desired shape.

### Third Embodiment

Hereinafter, a head-mounted display according to a third embodiment will be described. The head-mounted display according to the present embodiment is a modification example of the head-mounted display 100 according to the first embodiment, and is the same as the first head-mounted display 100, unless otherwise mentioned.

As illustrated in Fig. 7, in the case of a light guide device 10 of the third embodiment, a group of half mirror layers 41 constituting a multi-slit-shaped optical system are formed to be biased to the outer surface OS in a light emission portion 40. A rectangular layer-shaped reflective region in which a group of elongated half mirror layers 41 are arranged is referred to as a reflective portion 40r. This reflective portion 40r is formed along the outer surface OS. In the reflective portion 40r, a large number of half mirror layers 41 extend in a Y direction and are arranged in the X direction without a gap. Each half mirror layer 41 is inclined to be close to a light incident portion 20 on the outer side rather than on the observer side of the main body member 11. Specifically, each half mirror layer 41 is arranged to be inclined to the +Z side at the +X side.

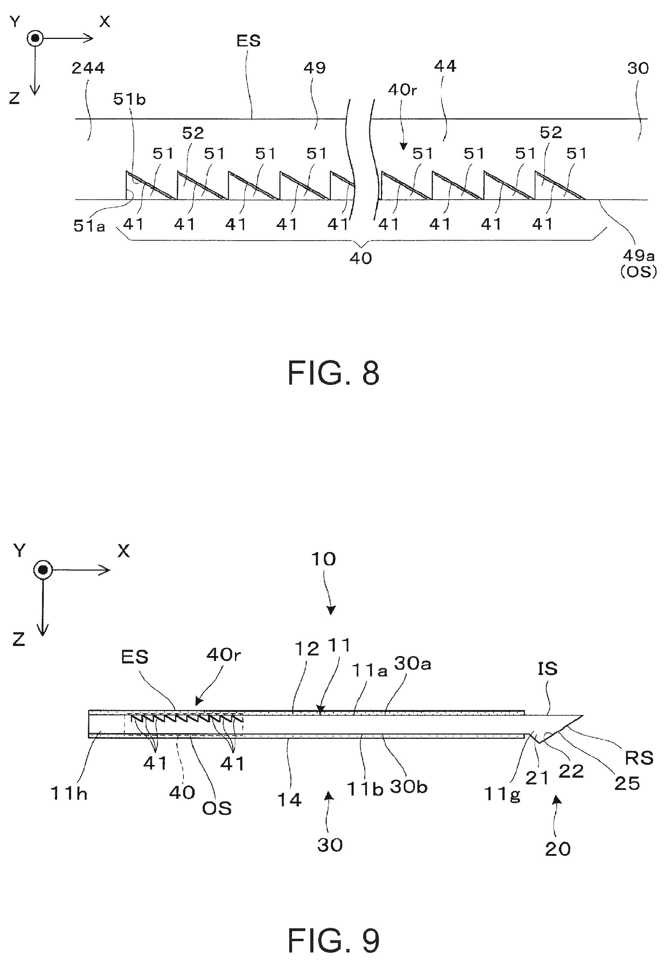

An example of a method of manufacturing the light emission portion 40 will be described with reference to Fig. 8. First, a flat plate glass 49 constituting the light emission portion 40 is prepared. Then, a large number of V-shaped grooves 51 extending in the Y direction and arranged without a gap in the X direction are formed on a surface 49a of the flat plate glass 49 through cutting, polishing, or the like. Each groove 51 includes an upright surface 51a and an inclined surface 51b, and a half mirror layer 41 is formed only on the inclined surface 51b. For this, for example, a mask may be arranged on the surface 49a of the flat plate glass 49 including a large number of grooves 51 formed therein, and deposition or the like is performed. Accordingly, the half mirror layer 41 can be selectively formed on only the inclined surfaces 51b of the large number of grooves 51. The half mirror layer 41 may also be selectively formed on only the inclined surface 51b by inclining the flat plate glass 49 instead of using the mask. Then, a liquid resin having a refractive index matching a refractive index of the flat plate glass 49 is poured into the large number of grooves 51 and cured by heat or ultraviolet light, resulting in a filled portion 52. Accordingly, it is possible to obtain the main body member 11 including a plate-shaped member having the large number of filled grooves 51, which is the light emission portion 40 having a large number of half mirror layers 41 built therein, or the light guide portion 30 extending therefrom. When the large number of grooves 51 are filled with the resin, capping may be performed using the protective layer 14. Accordingly, adhesion of the protective layer 14 is performed en bloc.

Sizes or spacings of the large number of half mirror layers 41 constituting the reflective portion 40r are not necessarily required to match each other, and may be adjusted according to positions.

Further, in the light guide device 10 illustrated in Fig. 7, it is also possible to cover the end surface 11k with the protective layer in the lateral end portion 11h. While this protective layer for an end surface may be formed separately from the protective layers 12 and 14 and fixed later, the protective layer may be formed en bloc integrally with the protective layers 12 and 14 using the same scheme as that illustrated in Fig. 6.

Fig. 9 illustrates a modification example of the light guide device 10 illustrated in Fig. 7. In this case, a reflective portion 40r is formed to be biased to a light emission surface ES.

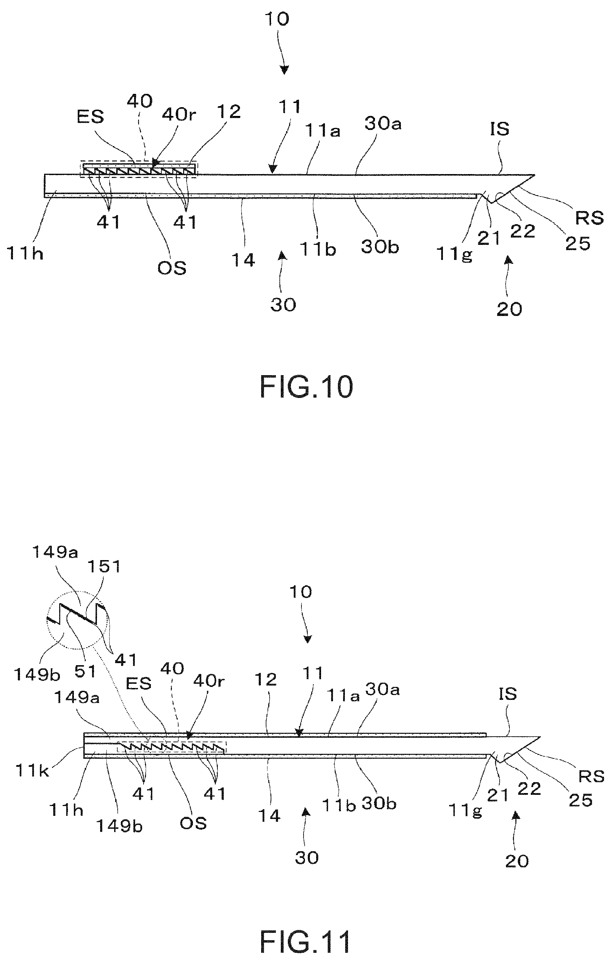

Fig. 10 illustrates another modification example of the light guide device 10 illustrated in Fig. 7. In this case, a reflective portion 40r is affixed to an outer side of the main body member 11. The reflective portion 40r is formed using the same scheme as the method of manufacturing the light emission portion 40 or the reflective portion 40r described in the first embodiment. However, the reflective portion 40r illustrated in Fig. 10 is a thinner plate than that shown in the first embodiment, and is affixed to a surface on a light emission surface ES side of a light guide portion 30 extending to a position of the light emission portion 40. In this case, while a protective layer 12 is provided on only the surface of the reflective portion 40r, that is, the light emission surface ES, the protective layer 12 may instead be formed to cover the light guide portion 30, that is, to cover an entire first main surface 11a other than a light incident surface IS.

Fig. 11 illustrates another modification example of the light guide device 10 illustrated in Fig. 7. In this case, a reflective portion 40r is formed to be buried in a main body member 11. The reflective portion 40r is obtained by combining a first optical member 149a extending from a light guide portion 30 with a second optical member 149b engaged therewith and bonding the first optical member 149a to the second optical member 149b. The first optical member 149a is formed of, for example, glass, and the second optical member 149b is formed of glass or plastic having substantially the same refractive index as that of the first optical member 149a. A large number of grooves 51 having a serrated cross-section and a half mirror layer 41 associated therewith is formed in the first optical member 149a using the same scheme as that illustrated in Fig. 8. On the other hand, a large number of grooves 151 having a shape corresponding to the large number of grooves 51 of the first optical member 149a are formed in the second optical member 149b. The first optical member 149a and the second optical member 149b are bonded to each other with an adhesive having substantially the same refractive index as that of the first optical member 149a and the second optical member 149b, thereby forming the reflective portion 40r.

In the light guide device 10 illustrated in Fig. 11, the end surface 11k of the lateral end portion 11h can be covered with a protective layer formed separately from or integrally with the protective layers 12 and 14. In this case, a bonding surface between the optical members 149a and 149b is covered with the protective layer, and strength of the reflective portion 40r increases.

### Fourth Embodiment

Hereinafter, a head-mounted display according to a fourth embodiment will be described. The head-mounted display according to this embodiment is a modification example of the head-mounted display 100 according to the second embodiment, and is the same as the second head-mounted display 100, unless otherwise mentioned.

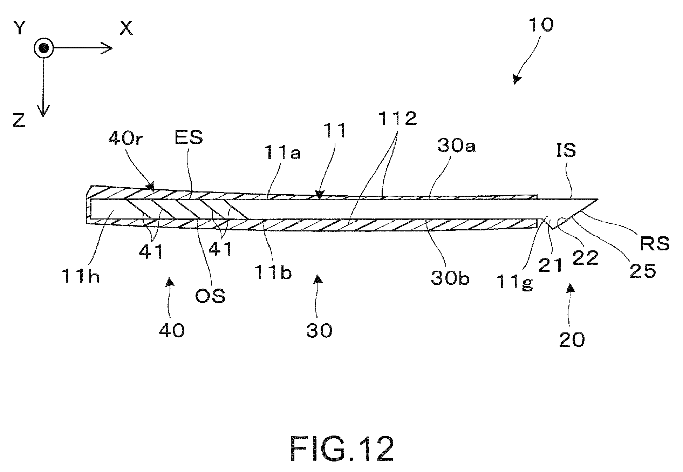

As illustrated in Fig. 12, in the case of a light guide device 10 of the fourth embodiment, a protective layer 112 does not have a uniform thickness and is curved in a convex or concave shape. In other words, using insert molding, it is possible to realize a curved appearance of the light guide device 10 or a lens effect of the light guide device 10 while maintaining the function of the main body member 11.

While the invention has been described above based on each embodiment, the invention is not limited to the embodiment and can be implemented in various aspects without departing from the scope of the invention as defined by the claims. For example, the following modifications are also possible.

While a transmissive liquid crystal display device 81b or the like is used as the image forming device 80 in the above embodiment, the image forming device 80 is not limited to the transmissive liquid crystal display device 81b, and various liquid crystal display devices can be used. For example, a configuration using a reflection type liquid crystal display device is also possible, and a digital micromirror device or the like can also be used in place of the liquid crystal display device 81b. Further, a self-luminous element of which representative examples includes an LED array and an organic EL (OLED) can also be used as the image forming device 80.

While the protective layers 12, 14, and 112 do not have a light guide function in the above embodiment, the protective layers 12, 14, and 112 can have the light guide function through adjustment of the refractive index. In this case, surfaces of the protective layers 12, 14, and 112 function as the main surfaces 11a and 11b of the main body member 11 or the light guide surfaces 30a and 30b of the light guide portion 30.

## Claims

1. A light guide device (10), comprising:
a light incident portion (20) configured to take image light into the inside;
a light guide portion (30) configured to guide the image light taken from the light incident portion through total reflection at first and second light guide surfaces (11a, 11b) that extend to face each other;
a light emission portion (40) configured to take the image light passing through the light guide portion to the outside; and
a protective layer (12,14) that is provided in association with at least the light emission portion and is configured to suppress breakage of the light emission portion.

2. The light guide device according to claim 1,
wherein the protective layer is in a sheet shape or a plate shape.

3. The light guide device according to claim 1 or claim 2,
wherein the light emission portion (40) includes a multi-slit-shaped reflective portion in which a plurality of reflective elements (41) for reflecting the image light are arranged.

4. The light guide device according to claim 3,
wherein the reflective portion is a flat plate-shaped member formed by arranging the reflective elements (41) between a plurality of prism-shape light-transmissive members (44), and
the protective layer is affixed to the flat plate-shaped member.

5. The light guide device according to any one of the preceding claims,
wherein the protective layer is provided on at least one of surfaces on the observer side and the outer side of the light emission portion.

6. The light guide device according to any one of the preceding claims,
wherein the protective layer is provided in an area other than the light incident portion.

7. The light guide device according to any one of the preceding claims,
wherein the protective layer is also provided on an end surface (11k) on the light emission portion side.

8. The light guide device according to any one of the preceding claims,
wherein the protective layer includes a light-transmissive main body (12a), and a surface treatment layer (12b) that covers a surface of the main body.

9. The light guide device according to any one of the preceding claims,
wherein the protective layer is formed of a resin material having adjusted transmittance, and has a uniform thickness.

10. A head-mounted display (100), comprising:
the light guide device (10) according to any one of the preceding claims; and
an image forming device (80) that forms image light incident on the light guide device.

11. A method of manufacturing a light guide device (10)including a light incident portion (20) that takes image light into the inside, a light guide portion (30) that guides the image light taken from the light incident portion through total reflection at first and second light guide surfaces (11a, 11b) that extend to face each other, and a light emission portion (40) that takes the image light passing through the light guide portion to the outside, the method of manufacturing a light guide device comprising:
forming a protective layer (12, 14) in a portion including at least the light emission portion.

12. The method of manufacturing the light guide device according to claim 11, wherein the light emission portion is formed by providing a reflective film (41) on a plurality of glass plates (44), superposing the plurality of glass plates, and obliquely cutting the glass plates.

13. The method of manufacturing a light guide device according to claim 11 or claim 12, further comprising:
performing shape processing on the light emission portion having the protective layer provided therein together with the protective layer.

14. The method of manufacturing a light guide device according to any one of claims 11 to 13,
wherein the protective layer is provided as a film affixed to a portion including the light emission portion or a plastic plate bonded to the portion including the light emission portion.

15. The method of manufacturing a light guide device according to any one of claims 11 to 13,
wherein the protective layer is provided through insert molding in which the light emission portion is positioned and is put into a mold, and then a resin is injected into the mold.
